# DEMANDE DE BREVET EUROPEEN

(11) **EP 1 884 745 A1**
(43) Date de publication de la demande: **06.02.2008**
(21) Numéro de dépôt: 07301242.9
(22) Date de dépôt: 17.07.2007
(51) Int. Cl.: G01C 21/36, G08G 1/0967

(54) **Procédé de détermination d'une zone d'interêt dans un système d'aide à la navigation d'un utilisateur de véhicule automobile**

(30) Priorité: 28.07.2006 FR 0653168
(71) Demandeur: PEUGEOT CITROËN AUTOMOBILES S.A., 78140 Velizy Villacoublay (FR)
(72) Inventeur: Soligon, Olivier, 78990 Elancourt (FR)

(57) **Abrégé**

L'invention concerne un procédé de détermination d'une zone d'intérêt géographique (E), dans un système d'assistance à la navigation de l'utilisateur d'un véhicule (VA), ce système comprenant des moyens de géopositionnement du véhicule (VA), et des moyens de transmission à l'utilisateur d'informations de trafic concernant des évènements se déroulant dans cette zone d'intérêt (E), caractérisé en ce qu'il comprend une étape de détermination d'une direction et d'une vitesse (V) de déplacement du véhicule (VA), et une étape de détermination d'une zone d'intérêt (E) de forme allongée ayant une orientation et une longueur dépendant de la direction et de la vitesse (V) de déplacement du véhicule (VA).

L'invention trouve son application dans le domaine de l'automobile.

## Description

L'invention concerne un procédé de détermination d'une zone d'intérêt dans un système d'aide à la navigation d'un utilisateur de véhicule automobile et un système d'aide à la navigation implémentant un tel procédé et comprenant une unité embarquée dans le véhicule pour fournir à l'utilisateur des instructions de guidage.

Dans les systèmes d'aide à la navigation connus, l'unité embarquée comprend des moyens de communication à distance avec un réseau distant de géopositionnement, tel que le réseau GPS (Global Positioning System), pour déterminer et mettre à jour la position courante du véhicule.

Cette unité embarquée comprend d'autre part des moyens de saisie avec lesquels l'utilisateur peut entrer une adresse de destination.

Sur la base de la position courante du véhicule VA et de l'adresse de destination, et à partir de données cartographiques numérisées, le système d'aide à la navigation détermine un itinéraire à suivre pour se rendre à cette adresse. Les informations de guidage correspondant à cet itinéraire sont communiquées à l'utilisateur sous forme visuelle par l'intermédiaire d'un écran et/ou sonore par l'intermédiaire d'un module de synthèse vocale.

De plus, l'unité embarquée communique avec un réseau externe d'informations de trafic, telles que des informations d'état du trafic, qui sont communiquées à l'utilisateur ou couplées avec les données cartographiques afin de déterminer l'itinéraire à suivre.

Toutefois, ces systèmes ne permettant pas de désigner aisément une destination, à cause des manipulations à partir de claviers ou de boutons qui s'avèrent contraignantes. Ainsi, les utilisateurs ne prennent pas systématiquement le temps de saisir leur adresse de destination.

A cet effet, le document EP10382836 propose un système implémentant un procédé de détermination d'une zone d'intérêt géographique pour sélectionner les informations de trafic à transmettre à l'utilisateur. La zone d'intérêt est définie de telle sorte qu'un évènement est signalé à l'utilisateur si il a lieu à une distance de la position courante du véhicule qui est inférieure à une valeur donnée.

Toutefois, dans le cas où le voisinage de la position courante du véhicule VA comprend de nombreux évènements routiers, l'utilisateur reçoit de nombreuses informations qui ne l'intéressent pas toutes et qui le déconcentrent de la conduite du véhicule VA. La sélection des informations que l'utilisateur doit effectuer constitue alors une source d'accident non négligeable.

Le but de l'invention est de remédier à cet inconvénient en proposant un procédé de détermination d'une zone d'intérêt géographique et système implémentant un tel procédé évitant de déconcentrer l'utilisateur inutilement.

A cet effet, l'invention concerne un procédé de détermination d'une zone d'intérêt géographique, dans un système d'assistance à la navigation de l'utilisateur d'un véhicule, ce système comprenant des moyens de géopositionnement du véhicule, et des moyens de transmission à l'utilisateur d'informations de trafic concernant des évènements se déroulant dans cette zone d'intérêt qui inclut la position courante du véhicule, caractérisé en ce qu'il comprend une étape de détermination d'une direction et d'une vitesse de déplacement du véhicule à partir de positions du véhicule fournies par les moyens de géopositionnement à différents instants, et une étape de détermination d'une zone d'intérêt de forme allongée ayant une orientation et une longueur dépendant respectivement de la direction et de la vitesse de déplacement du véhicule.

Selon une autre caractéristique de l'invention, la zone d'intérêt est une ellipse ayant un grand axe orienté selon la direction de déplacement et ayant une longueur proportionnelle à la vitesse, un premier foyer correspondant à la position courante, et un second foyer situé en avant du premier foyer par rapport au sens de déplacement.

Selon une autre caractéristique de l'invention, la zone d'intérêt a une forme qui dépend du type de route parcourue.

Selon une autre caractéristique de l'invention, les données de géopositionnement sont exploitées conjointement avec des données cartographiques numériques incluant une typologie des voies de circulation, et dans lequel l'étape de détermination de la zone d'intérêt comprend le calcul de l'excentricité de l'ellipse en prenant en compte le type de voie de circulation sur lequel se trouve le véhicule.

Selon une autre caractéristique de l'invention, l'étape de détermination de la zone d'intérêt comprend le calcul de l'excentricité de l'ellipse en prenant en compte la vitesse du véhicule pour que cette excentricité soit proportionnelle à la vitesse du véhicule.

Selon une autre caractéristique de l'invention, les données de géopositionnement sont exploitées conjointement avec des données cartographiques numériques incluant une typologie des voies de circulation, et dans lequel la zone d'intérêt est actualisée à une fréquence dépendant du type de voie de circulation parcourue.

L'invention concerne également un système d'assistance à la navigation de l'utilisateur d'un véhicule, comprenant des moyens de géopositionnement du véhicule, et des moyens de transmission à l'utilisateur d'informations de trafic concernant des évènements se déroulant dans une zone d'intérêt qui inclut la position courante du véhicule, caractérisé en ce qu'il comprend des moyens de détermination de la zone d'intérêt selon le procédé défini précédemment.

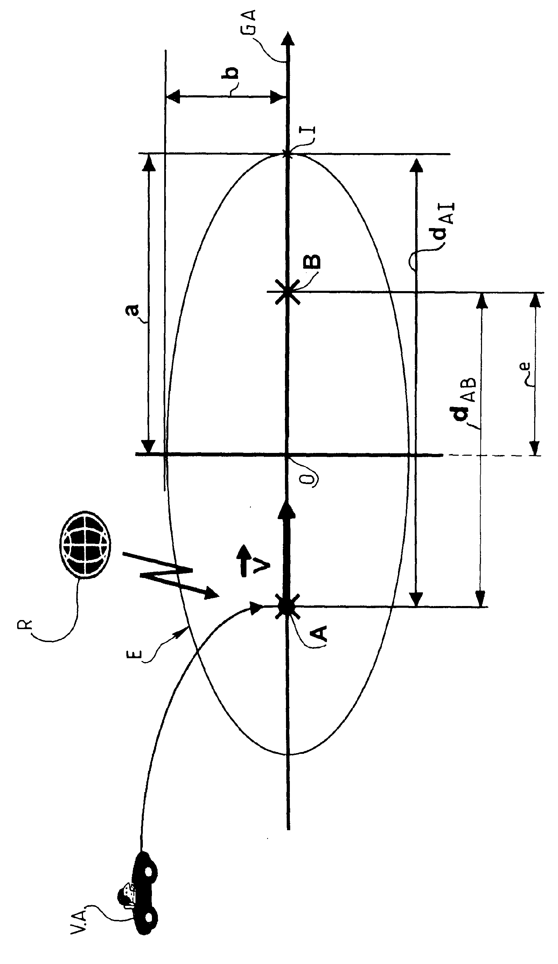

L'invention sera maintenant décrite en détail, en référence à la figure annexée.
- la figure représentée sur la planche 1/1 est une représentation schématique d'une zone d'intérêt géographique définie par le procédé selon l'invention.

L'invention concerne un procédé de détermination d'une zone d'intérêt géographique E et un système d'aide à la navigation d'un utilisateur de véhicule VA implémentant un tel procédé.

De façon connue, le système comprend une unité embarquée dans le véhicule VA qui comprend des moyens de communication à distance avec un réseau distant de géopositionnement R, tel que le réseau GPS, lui transmettant la position courante du véhicule VA à intervalles réguliers ou continûment.

Ces informations de géopositionnement sont des données de localisation telles que la latitude et la longitude du véhicule VA à l'instant considéré.

Le système couple ces informations avec des données d'une base de données cartographique numérique.

Cette base de données renferme le tracé des routes et des informations qui leur correspondent tels que l'appellation de chaque voie, les numéros de bâtiments et une typologie des voies de circulation.

A partir de ces données mémorisées et de la position courante du véhicule VA, l'unité embarquée est capable de déterminer un trajet optimal selon des conditions moyennes préenregistrées.

Afin de prendre en compte les perturbations du trafic sur l'itinéraire choisi, l'unité embarquée comprend des moyens de communication avec un réseau externe d'informations de trafic, tels que le service V-Trafic, lui permettant de recevoir en temps réel des informations de trafic, de météo ou concernant tout évènement pouvant modifier la circulation.

Dans le cas du service V-Trafic, les informations événementielles sont codées et diffusées par voie FM. La technologie utilisée est le RDS permettant la transmission de données numériques par voie FM. Les informations trafic reçues par l'unité embarquée sont celles d'une région géographique dans laquelle le véhicule VA se déplace. Seuls les événements de première importance, tels que les fermetures de voies et les accidents graves, sont diffusés à l'échelle nationale.

L'unité embarquée comprend des moyens de transmission d'informations à l'utilisateur par lesquels elle communique à l'utilisateur ces informations trafics.

Lorsque aucune destination n'a été précisée, le système communique à l'utilisateur uniquement les informations de trafic concernant des évènements se déroulant dans une zone d'intérêt géographique E incluant la position courante du véhicule VA.

Selon l'invention, le procédé de détermination de la zone d'intérêt E comprend une étape de détermination d'une direction et d'une vitesse V de déplacement du véhicule VA à partir de positions du véhicule VA fournies par les moyens de géopositionnement à différents instants, et une étape de détermination d'une zone d'intérêt E de forme allongée ayant une orientation et une longueur dépendant respectivement de la direction et de la vitesse V du déplacement du véhicule VA.

Ainsi, parmi les informations de trafic qu'il reçoit, le système communique à l'utilisateur uniquement celles qui sont plus particulièrement susceptibles de le concerner en considérant la position, la direction et la vitesse V du véhicule.

Si l'information concerne un évènement qui a lieu en dehors de la zone d'intérêt E, cette information n'est pas transmise mais est temporairement mémorisée afin d'être prise en compte au cours d'un autre trajet.

Pour déterminer les paramètres du vecteur vitesse *V* du véhicule VA, c'est-à-dire la direction de déplacement et la vitesse V du véhicule VA, l'unité embarquée prend en compte plusieurs positions du véhicule VA à des instants t différents sur la dernière minute du déplacement du véhicule.

Puis, à partir de la position, de la direction, et de la vitesse, le système détermine la zone d'intérêt E par une ellipse E ayant un grand axe GA coïncidant avec la direction de déplacement du véhicule VA, un premier foyer A correspond à la position courante du véhicule VA et un second foyer B situé en avant du premier foyer A par rapport au sens de déplacement du véhicule VA.

Les paramètres de l'ellipse peuvent être déterminés à partir d'une durée de couverture, notée T, préenregistrée dans l'unité embarquée en ayant été éventuellement choisie par l'utilisateur, la zone d'intérêt E étant d'autant plus étendue que la durée T est importante.

Cette durée T correspond au temps maximal séparant l'utilisateur d'un évènement, tel qu'un accident, qui lui est annoncé par l'unité embarquée en considérant qu'il roulerait vers cet évènement à une vitesse constante correspondant par exemple à la vitesse du véhicule VA à l'instant considéré.

Ainsi, la durée T correspond au temps pendant lequel le véhicule VA parcourrait la distance séparant sa position courante A du point de l'ellipse E qui est le plus éloigné de cette position courante, à savoir le point I sur la figure, de sorte que l'on a d_{AI} = V × T, où V désigne la vitesse courante du véhicule VA.

Les foyers A et B sont séparés par une distance d_{AB} proportionnelle à la vitesse V du véhicule VA. L'excentricité e correspondant à la moitié de la distance entre les foyers d_{AB} est calculée à partir de la relation d_{AI} = k × e, où k est un coefficient qui est défini par le type de voie de circulation. Selon la typologie des voies de circulations de la base de données, les voies sont par exemple réparties en trois types qui sont l'autoroute, la route, et la zone urbaine pour définir trois valeurs de k. En conséquence, le système change la forme de la zone d'intérêt E automatiquement suivant cette classification.

Ainsi, pour une valeur donnée de d_{AI}, l'ellipse E a une excentricité e d'autant plus importante que la valeur de k est faible. Ceci permet par exemple d'avoir une ellipse E ayant une forme plus allongée lorsque l'utilisateur roule sur une autoroute, et une forme plus circulaire lorsque l'utilisateur roule en zone urbaine.

Par exemple, si l'utilisateur souhaite recevoir des informations de trafic selon une couverture correspondant à une durée de 10 minutes, que les voies de circulation environnantes sont des routes correspondant à k=3, et que la vitesse moyenne est de 90km/h, alors e=5km, la distance interfocale d_{AB} est de 10 km, et l'information trafic couvre une zone en avant du point A de d_{AI} = 15 km et dans un rayon minimum de e=5km.

Alternativement, la forme de l'ellipse E, c'est-à-dire son excentricité e, peut être définie sur la base de la vitesse V du véhicule au lieu de l'être sur la base de la typologie des voies de circulation de la base de données cartographique.

Dans ce cas, le système détermine d_{AI} à partir de la valeur de la vitesse V et de la durée de couverture T. Puis, le système compare cette valeur d_{AI} à trois intervalles de valeurs : d_{AI} < 10km correspondant au mode local, 10km < d_{AI} < 50km correspondant au mode étendu et d_{AI} > 50km correspondant au mode très étendu. Chaque mode correspond à une valeur du coefficient k à partir de laquelle l'unité embarquée peut calculer l'excentricité e.

Dans les deux cas, le demi-grand axe a est tel que a = d_{AI} - e et le demi-petit axe b est déduit selon l'équation caractéristique: a² = b² + e².

Au cours des différents déplacements en mode « destination inconnue», la zone d'intérêt E est actualisée à une fréquence dépendant du type de route parcourue.

Il est à noter que lors du démarrage, la direction du véhicule VA n'étant pas stable, le système considère une zone d'intérêt E circulaire centrée sur la position courante du véhicule VA avec un rayon dépendant du type de route empruntée.

Un tel système permet, dans le cas d'un déplacement sans avoir lancé un guidage, de communiquer à l'utilisateur des informations de trafic grâce à une sélection géographique et intelligente des évènements de façon à ce qu'il ne soit pas déconcentré lors de la conduite du véhicule VA par des informations qui ne le concernent pas.

## Revendications

1. Procédé de détermination d'une zone d'intérêt géographique (E), dans un système d'assistance à la navigation de l'utilisateur d'un véhicule (VA), ce système comprenant des moyens de géopositionnement du véhicule (VA), et des moyens de transmission à l'utilisateur d'informations de trafic concernant des évènements se déroulant dans cette zone d'intérêt (E) qui inclut la position courante du véhicule (VA), **caractérisé en ce qu'**il comprend une étape de détermination d'une direction et d'une vitesse (V) de déplacement du véhicule (VA) à partir de positions du véhicule (VA) fournies par les moyens de géopositionnement à différents instants, et une étape de détermination d'une zone d'intérêt (E) de forme allongée ayant une orientation et une longueur dépendant respectivement de la direction et de la vitesse (V) de déplacement du véhicule (VA).

2. Procédé selon la revendication 1, dans lequel la zone d'intérêt (E) est une ellipse ayant un grand axe (GA) orienté selon la direction de déplacement (VA) et ayant une longueur proportionnelle à la vitesse (V), un premier foyer (A) correspondant à la position courante (VA), et un second foyer (B) situé en avant du premier foyer (A) par rapport au sens de déplacement (VA).

3. Procédé selon l'une des revendications 1 ou 2, dans lequel la zone d'intérêt (E) a une forme qui dépend du type de route parcourue.

4. Procédé selon l'une des revendications précédentes, dans lequel les données de géopositionnement sont exploitées conjointement avec des données cartographiques numériques incluant une typologie des voies de circulation, et dans lequel l'étape de détermination de la zone d'intérêt (E) comprend le calcul de l'excentricité (e) de l'ellipse en prenant en compte le type de voie de circulation sur lequel se trouve le véhicule (VA).

5. Procédé selon l'une des revendications 1 à 3, dans lequel l'étape de détermination de la zone d'intérêt (E) comprend le calcul de l'excentricité (e) de l'ellipse en prenant en compte la vitesse (V) du véhicule (VA) pour que cette excentricité (e) soit proportionnelle à la vitesse (V) du véhicule (VA).

6. Procédé selon l'une des revendications précédentes, dans lequel les données de géopositionnement sont exploitées conjointement avec des données cartographiques numériques incluant une typologie des voies de circulation, et dans lequel la zone d'intérêt (E) est actualisée à une fréquence dépendant du type de voie de circulation parcourue.

7. Système d'assistance à la navigation de l'utilisateur d'un véhicule (VA), comprenant des moyens de géopositionnement du véhicule (VA), et des moyens de transmission à l'utilisateur d'informations de trafic concernant des évènements se déroulant dans une zone d'intérêt (E) qui inclut la position courante du véhicule (VA), **caractérisé en ce qu'**il comprend des moyens de détermination de la zone d'intérêt (E) selon le procédé défini par l'une des revendications 1 à 6.
